(19) Europäisches Patentamt
European Patent Office
Office européen des brevets

(11) Numéro de publication: **0 019 338**
**B1**

(12) **FASCICULE DE BREVET EUROPEEN**

(45) Date de publication du fascicule du brevet: **08.09.82**

(51) Int. Cl.³: **C 04 B 5/00**, C 04 B 7/00, C 03 C 3/00

(21) Numéro de dépôt: **80200440.8**

(22) Date de dépôt: **12.05.80**

(54) **Procédé de préparation de laitiers artificiels, laitiers artificiels ainsi obtenus et leur utilisation.**

(30) Priorité: **14.05.79 BE 195148**

(43) Date de publication de la demande: **26.11.80 Bulletin 80/24**

(45) Mention de la délivrance du brevet: **08.09.82 Bulletin 82/36**

(84) Etats contractants désignés: **DE FR GB SE**

(56) Documents cités:
**BE-A-495 093**
**BE-A-824 788**
**US-A-1 343 948**

(73) Titulaire: **Eurofours Société Anonyme, Rue du Couvent 174, B-4500 Jupille s/Meuse (BE)**
Titulaire: **Bureau d'Etudes "DELTA G.C.", S.A., 11, rue Fabry, B-4000 Liege (BE)**

(72) Inventeur: **Cransveld, Joseph, 91 rue Tribomont, B-4851 Wegnez (BE)**
Inventeur: **Bruls, Alois, Avenue de la Grotte, 57, B-4040 Tilff (BE)**

(74) Mandataire: **Pirson, Jean et al, C/O Bureau GEVERS S.A. 7, rue de Livourne, B-1050 Brussels (BE)**

**EP 0 019 338 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

# Procédé de préparation de laitiers artificiels, laitiers artificiels ainsi obtenus et leur utilisation

La présente invention est relative à un procédé de préparation de laitier artificiel comprenant la préparation d'une charge comprenant au moins, sous forme libre ou combinée, de la chaux, de la silice et de l'alumine, et la fusion totale de cette charge à une température comprise entre 1400 et 1550° C, la composition chimique de cette charge étant telle que le laitier artificiel fondu comprenne au moins 45 à 52% de CaO, 15 à 22% de $Al_2O_3$ et 27 à 34% de $SiO_2$ du produit sec, et soit capable de vitrifier après la fusion. L'invention concerne aussi un laitier artificiel ainsi obtenu et les utilisations de ce laitier artificiel.

Par le terme «laitier artificiel» il faut entendre un produit de composition chimique analogue au laitier obtenue par voie métallurgique, tel que par exemple du laitier de haut fourneau, mais qui n'est pas un sous-produit d'un procédé métallurgique.

Il est en effet connu de récolter certains laitiers de haut fourneau pour en fabriquer un ciment de laitier. Ce laitier de haut fourneau présente la composition suivante: 30 à 50% de CaO, 28 à 38% de $SiO_2$ et 8 à 24% de $Al_2O_3$ (voir H.F.W. Taylor, The Chemistry of Cements, n° 2, p. 21). Le laitier est élaboré dans un haut fourneau et les produits de départ sont le minerai de fer, du coke et des fondants.

On connaît un procédé de préparation de laitier artificiel comprenant le mélange de cendres de centrales électriques ou de produits de terrils avec du carbonate de calcium, la cuisson de ce mélange à une température d'environ 1300° C et la fusion du mélange cuit à une température d'environ 1500° C, la cuisson et la fusion étant effectuées dans un complexe de fours (voir brevet belge N° 766 032). Dans le cas où la teneur en oxyde de fer est suffisamment importante dans la charge, il est prévu suivant le procédé de ce brevet de dépasser largement la température de fusion franche, jusqu'à 1800° C pour favoriser la séparation d'éléments métalliques denses qui se déposent au fond du four, de récupérer ces éléments métalliques et de refroidir ensuite le laitier à 1500° C pour pouvoir le couler. Le déposant de ce brevet mentionne alors qu'au cours de cette phase, le laitier obtenu est purifié en liant blanc. Suivant le procédé ci-dessus, le laitier en fusion est refroidi rapidement par trempage à l'eau et broyé par voie humide à une finesse de mouture correspondant à une surface spécifique supérieure à un minimum de 5000 cm²/g mesurée par la méthode de Blaine.

Suivant le brevet belge n° 824 788, il est connu de préparer selon le procédé décrit dans le brevet belge 766 032 un laitier fondu dont la composition chimique comprend 42 à 52% de CaO, 12 à 22% de $Al_2O_3$ et 28 à 33% de $SiO_2$.

Le procédé suivant les brevets belges précités présente cependant les inconvénients qu'il nécessite deux opérations de chauffage et un complexe de fours et que la phase de broyage doit s'effectuer en milieu humide pour obtenir la finesse voulue. En effet il est alors nécessaire d'effectuer le séchage ultérieurement dans une enceinte présentant des orifices d'évacuation de la vapeur. Etant donné la finesse de grain du produit obtenu, des problèmes insurmontables de pollution de l'environnement se soulèvent et le séchage en lui-même demande une grande consommation d'énergie. Enfin, il n'est pas indiqué d'ajouter une charge active ou un catalyseur au liant broyé si le séchage n'a pas été effectué en profondeur.

Le broyage à sec est connu en cimenterie et il est effectué généralement dans des broyeurs à boulet qui ne permettent pas d'obtenir une finesse de granulation telle que celle visée plus haut.

D'autre part, le procédé de séparation des éléments métalliques denses à partir du laitier suivant le brevet belge 766 032 présente des inconvénients quasi insurmontables résultant des chocs thermiques auxquels seraient soumises les matières réfractaires du four lors du chauffage à 1800° C puis du refroidissement à 1500° C.

La présente invention a pour but de mettre au point un procédé de préparation de laitier artificiel simple qui permette d'éviter les inconvénients décrits ci-dessus.

Suivant la présente invention, il est prévu un procédé, tel que décrit au préambule de la revendication 1, dans lequel la charge sèche est portée à fusion totale dans une cuve unique en une seule opération de chauffage, dans la masse, à une température constante, obtenue par voie électrique, la charge introduite présentant une granulométrie inférieure à une ouverture de tamis de 5mm.

La composition de la charge à introduire dans le procédé suivant l'invention peut varier suivant la nature des matières premières et suivant la qualité du produit fabriqué. La charge est constituée par un mélange intime de matières contenant nécessairement de la chaux, de la silice, et de l'alumine. Certains autres métaux sont utiles ou tolérés en quantité limitée; par exemple: le fer, le manganèse, le sodium, le potassium, etc...

La composition du mélange doit être telle qu'après fusion il soit possible de le vitrifier convenablement, et que le laitier artificiel obtenu ait la composition précédemment citée. Ainsi qu'il ressort de la figure unique annexée qui représente un diagramme ternaire de Rankin CaO, $Al_2O_3$, $SiO_2$ sur lequel des plages de température de fusion sont indiquées, le laitier suivant l'invention doit présenter une composition telle qu'il se trouve dans le trapèze pointillé sur le diagramme. Sur ce dernier la référence 1 désigne les verres, 2 les pouzzolanes + cendres volantes, 3 les laitiers métallurgiques, 4 les ciments Portland et 5 les ciments alumineux.

La chaux peut provenir de toute roche naturelle ou de tout sous-produit ou déchet industriel contenant, sous forme libre ou combinée, du CaO. La chaux peut être extraite du calcaire, de la craie, du

gypse, du tuffeau, des cendres résiduelles de la combustion du charbon, des laitiers de sidérurgie (laitier acide, laitier basique, laitier LD), du groisil, etc...

La décarbonatation du calcaire peut se faire soit avant la fusion soit pendant la fusion de la charge.

La silice peut provenir de toute roche naturelle ou de tout sous-produit ou déchet industriel contenant, sous forme libre ou combinée, du $SiO_2$. La silice peut être extraite du grès, du sable, des roches volcaniques ou de sédimentation, du quartzite, de la psammite, des cendres résiduelles de la combustion du charbon, du charbon, du kaolin, des pouzzolanes, des laitiers de sidérurgie (laitier acide, laitier basique, laitier LD...), des terrils de charbonnage, des scories, etc...

L'alumine peut provenir de toute roche naturelle ou de tout sous-produit ou déchet industriel contenant, sous forme libre ou combinée, du $Al_2O_3$. L'alumine peut être extraite de l'argile, des ardoises, du schiste, de la bauxite, du sable, du charbon, des roches volcaniques ou de sédimentation, des pouzzolanes, du kaolin, des cendres résiduelles de la combustion du charbon, des terrils de charbonnages, des scories, des résidus de lavoir, du groisil, des déchets de briques, des laitiers de sidérurgie (laitier acide, laitier basique, laitier LD...).

Pour obtenir un mélange intime des matières lors de la fusion, celles-ci doivent se présenter sous forme de grains de granulométrie inférieure à 5mm; un broyage peut être nécessaire. Les produits se présentant à l'origine sous forme de grains fins sont particulièrement intéressants (laitiers, sables, cendres de centrales électriques...). Si la teneur en eau est excessive, les produits sont préalablement séchés.

La fusion de la charge peut être réalisée dans un four électrique par exemple à électrode immergée. On peut également prévoir un chauffage d'appoint de la masse fondue, par exemple par l'intermédiaire de brûleurs à combustible gazeux, liquide ou solide ou même par combustion du contenu de la charge. Ce chauffage d'appoint nécessite évidemment la présence ou l'adjonction d'un comburant contenant de l'oxygène.

Suivant un mode de réalisation particulier de l'invention la fusion de la charge est effectuée en milieu réducteur pendant une durée suffisante pour obtenir la réduction de l'oxyde de fer contenu dans la charge, le dépôt du fer métallique obtenu, avec évacuation éventuelle de ce dernier, et la formation d'un laitier artificiel blanc.

Suivant un mode perfectionné de réalisation de l'invention, la charge est amenée, en continu et de manière répartie, à la surface de la masse fondue contenue dans une cuve polygonale ou circulaire à chauffage par électrode immergée, la masse en fusion est amenée à circuler dans la cuve de manière à passer obligatoirement dans la zone de chauffage maximum des électrodes, avant d'atteindre la sortie de la cuve, et le laitier en fusion ainsi obtenu est évacué en continu de la cuve par cette sortie.

Suivant un mode de réalisation perfectionné de l'invention, le procédé comprend en outre la vitrification du laitier artificiel par trempage, avec granulation de ce dernier, le séchage éventuel du laitier artificiel granulé et le broyage à sec du laitier artificiel granulé, de façon à obtenir un laitier artificiel broyé présentant une surface spécifique mesurée par la méthode de Blaine qui est comprise entre 5000 $cm^2/g$ et 10 000 $cm^2/g$. Il est avantageux d'effectuer le broyage en question dans un broyeur vibrant avec recyclage.

La présente invention concerne également le laitier artificiel obtenu par le procédé suivant l'invention et une particularité de cette invention est que l'utilisation du laitier en fusion obtenu peut se faire simultanément ou successivement, notamment pour la fabrication de liant hydraulique, de verre, notamment de verre industriel, décoratif ou cellulaire, de fibres de laitier, de laitier cellulaire, etc...

A partir de la même charge, et du même four, il est en effet possible de fabriquer simultanément plusieurs des quatre produits suivants: du liant hydraulique, du verre, de la fibre de laitier, du laitier cellulaire, lorsqu'on prévoit plusieurs orifices de sortie dans le four de fusion.

L'invention sera décrite de manière plus détaillée à l'aide des exemples ci-après, sans être pour autant limitée par ces derniers.

*Exemple 1*

Procédé de préparation de liant hydraulique.

Un mélange de base est constitué de 43% de cendres volantes et de 57% de calcaire présentant la composition suivante:

| | Analyse des cendres | Analyse de calcaire |
|---|---|---|
| $SiO_2$ | 46,8 | 1,34 |
| CaO | 1,59 | 54,79 |
| $Al_2O_3$ | 32,46 | 0,46 |
| $Fe_2O_3$ | 3,4 | 0,30 |
| MgO | 1,68 | 0,67 |
| Perte au feu | 9,12 | 42,40 |
| Solde | 4,95 | 0,04 |

Le calcaire est réduit à une granulométrie de 0 à 2mm d'ouverture de tamis, les cendres sont utilisées après tamisage sur un tamis à mailles de 2,5mm. Ce mélange est fondu dans un four de fusion à électrode immergée, la décarbonatation du calcaire ayant lieu dans ce même four. La décarbonatation se fait de préférence à la surface du bain dans la zone périphérique de chargement, ensuite le produit devient pâteux et la fusion se fait selon les mélanges à une température à partir de 1400° C. Le couplage des électrodes immergées est réalisé de façon que la charge alimentée en suface doive passer par la zone chaude du four, où elle atteint la température de fusion, avant d'atteindre la sortie du four, agencée en forme de trop-plein.

On peut éventuellement prévoir l'introduction d'une fraction de la charge en dessous de la surface de la masse fondue de manière à réaliser une

meilleure protection du matériau réfractaire par l'apport direct de charge froide à sa surface.

Le laitier obtenu est granulé par trempage à l'eau (en effet ce laitier ne fait pas prise à l'eau, même broyé), séché et broyé très finement dans un broyeur vibrant avec recyclage par cyclone. L'intérêt d'une grande finesse de broyage (à une surface spécifique supérieure à 5000 $cm^2/g$) réside dans une utilisation plus complète du pouvoir de réaction du liant hydraulique préparé et par conséquent son utilisation plus parcimonieuse. En fonction de la finesse de broyage et de la proportion de la charge (qui peut atteindre 80%), on obtient un liant de même qualité que ceux mis sur le marché (résistances à la compression de 50 $N/mm^2$, 40 $N/mm^2$ et 30 $N/mm^2$). Les grains de la charge sont de dimension supérieure au laitier broyé. Le mélange est homogénéisé et si la charge additionnée est inerte, on ajoute un déclencheur de réaction, soit en usine au laitier broyé sec, soit au moment du gâchage. Les déclencheurs de réaction doivent comprendre des ions au moins aussi électro-positifs que le calcium. On peut utiliser par exemple de l'hydroxyde de sodium, de potassium ou de calcium, du chlorure de sodium, de potassium ou de calcium, du sulfate de sodium, de patassium ou de calcium, du carbonate de sodium ou de potassium ou de l'oxyde de calcium ou encore du ciment Portland.

Ou pourrait aussi prévoir un trempage à l'air du laitier, sans séchage ultérieur.

*Exemple 2*

Procédé de préparation de liant hydraulique.

Un mélange de base est constitué de 55% de sable coralien, de 42% de pouzzolanes naturelles et de 3% de bauxite.

Analyse des pouzzolanes et du sable coralien utilisés:

| | Pouzzolanes | Sable coralien |
|---|---|---|
| $SiO_2$ | 54,82 | 0,24 |
| CaO | 6,05 | 55,79 |
| $Al_2O_3$ | 23,03 | 0,16 |
| $Fe_2O_3$ | 6,79 | 0,20 |
| MgO | 0,83 | 0,17 |
| Perte au feu | 3,31 | 43,32 |
| Solde | 5,17 | 0,12 |

Le sable coralien est séché et tamisé sur un tamis à mailles de 2,5 mm d'ouverture. La pouzzolane est réduite à une granulométrie de 0 à 2 mm d'ouverture de tamis.

Ce mélange est fondu dans un four de fusion et de décarbonatation unique tel que précédemment décrit.

La fusion est effectuée à une température de 1550° C et un faible pourcentage de carbone en poudre est ajouté pour favoriser la réduction du $Fe_2O_3$. Le laitier obtenu est ensuite traité comme dans l'exemple 1 mais, comme charge, on ajoute des pouzzolanes broyées d'une granulométrie voisine de 150 µ.

*Exemple 3*

Procédé de préparation de fibres de laitier.

Du laitier en fusion préparé selon le procédé suivant la présente invention est traité à sa sortie du four par des procédés connus et utilisés lors de la fabrication de fibres de verre. Pour fabriquer des fibres longues, on peut étirer la matière à la filière ou selon tout autre système. Pour fabriquer des fibres courtes, le filet de laitier en fusion peut être divisé par un violent courant d'air, ou bien s'écouler sur un plateau tournant à grande vitesse, ou selon tout autre système.

Les fibres longues constituent de la laine de laitier qui peut être utilisée en vrac ou en matelas, comme élément isolant thermique ou acoustique.

Les fibres de laitier, telles que produites suivant ce procédé sont entièrement vitrifiées.

*Exemple 4*

Procédé de préparation de liant hydraulique.

Des fibres de laitier composées de fibres très fines, telles que préparées suivant le procédé de l'exemple 3, peuvent être traitées pour constituer un liant hydraulique. Après broyage de ces fibres, on constitue le liant hydraulique en ajoutant une charge inerte ou non de granulométrie appropriée. Si la charge est active, le produit obtenu est en liant hydraulique. Si la charge est inerte, un déclencheur de réaction sera additionné au produit obtenu comme cela est décrit pour la fabrication du liant hydraulique suivant l'exemple 1.

Si les fibres ne sont pas broyées, l'emploi d'une charge et d'un déclencheur de réaction permet d'obtenir un produit ayant une bonne résistance à la traction.

*Exemple 5*

Procédé de préparation de laitier artificiel blanc, de liant hydraulique blanc et de liant hydraulique teinté.

Les matières premières constituant la charge contiennent fréquemment des quantités importantes d'oxydes métalliques et notamment des oxydes de fer. Cela concerne, entre autres, les cendres volantes et les roches naturelles à haute teneur en alumine.

Si le mélange qu'on introduit dans le four contient une quantité suffisante de carbone et si le bain est mis à une des températures prévues pour la fusion du mélange, par exemple de 1550° C, l'oxyde de fer est réduit. On obtient ainsi un laitier blanc exempt de fer. Le carbone nécessaire à la réduction des oxydes peut provenir des cendres ou de tout autre élément de la charge par exemple du charbon broyé ainsi que du combustible utilisé pour la fusion.

Selon le présent exemple, la charge comprend 60% d'un mélange formé de ⅗ de cendres lourdes riches en carbone et de ⅖ de cendres volantes pauvres en carbone, et 40% de calcaire.

| | Analyse des cendres lourdes | Analyse des cendres vol. | Analyse du calcaire |
|---|---|---|---|
| $SiO_2$ | 33,56 | 43,47 | 1,34 |
| CaO | 13,94 | 14,50 | 54,79 |
| $Al_2O_3$ | 14,43 | 19,68 | 0,46 |
| $Fe_2O_3$ | 11,92 | 14,89 | 0,30 |
| MgO | 0,65 | 0,56 | 0,67 |
| Perte au feu | 20,79 | 2,15 | 42,40 |
| Solde | 4,82 | 5,07 | 0,04 |

Dans le mélange ainsi constitué les % de carbone (perte au feu des cendrées) vont réagir avec les % de $Fe_2O_3$ des cendres en réduisant l'oxyde à l'état de fer métallique (non soluble dans le laitier) selon la formule:

$$2\,Fe_2O_3 + 3\,C \rightarrow 4\,Fe + 3\,CO_2 \nearrow$$

Il faut donc noter que ce procédé de préparation de laitier artificiel blanc est beaucoup plus économique que celui prévu dans les brevets belges précités puisqu'il ne demande en aucune façon un chauffage largement plus éleve que la température de fusion du mélange et donc aucun refroidissement du mélange pour entamer la coulée. De plus les matières réfractaires du four ne sont pas soumises à des chocs thermiques successifs qui altéreraient leur durée de vie.

Au contraire des liants blancs obtenus à partir de ciment Portland, il n'est aucunement nécessaire suivant l'invention de prévoir des appareillages spéciaux et coûteux totalement exempts de Fe pour produire du laitier blanc de bonne qualité. Le four utilisé dans les exemples précédents peut convenir parfaitement.

A partir du laitier blanc obtenu, on procède comme décrit dans l'exemple 1 pour former un liant hydraulique. Cependant, comme charge, on ajoute, selon la teinte souhaitée du liant hydraulique, par exemple de la craie si l'on veut obtenir une teinte blanche ou de la pierre naturelle broyée si l'on veut obtenir un liant ayant la couleur de cette pierre naturelle pour former de la pierre reconstituée.

Il doit être entendu que la présente invention n'est en aucune façon limitée aux modes de réalisation décrits ci-dessus et que bien des modifications peuvent y être apportées, sans sortir du cadre du présent brevet.

**Revendications**

1. Procédé de préparation de laitier artificiel comprenant la préparation d'une charge comprenant au moins, sous forme libre ou combinée, de la chaux, de la silice et de l'alumine, et la fusion totale de cette charge à une température comprise entre 1400 et 1550° C, la composition chimique de cette charge étant telle que le laitier artificiel fondu comprenne au moins 45 à 52% de CaO, 15 à 22% de $Al_2O_3$ et 27 à 34% de $SiO_2$ du produit sec et soit capable de vitrifier après la fusion, caractérisé en ce que la charge sèche est portée à fusion totale dans une cuve unique en une seule opération de chauffage, dans la masse, à une température contante, obtenue par voie électrique, la charge introduite présentant une granulométrie inférieure à une ouverture de tamis de 5 mm.

2. Procédé suivant la revendication 1, caractérisé en ce que la fusion de la charge est obtenue par chauffage de la charge à la température susdite uniquement par voie électrique.

3. Procédé suivant la revendication 1, caractérisé en ce que la fusion de la charge est obtenue par chauffage de la charge à la température susdite par voie électrique, avec apport simultané de chaleur par combustion d'un combustible brûlant en présence d'un comburant.

4. Procédé suivant l'une quelconque des revendications 1 à 3, caractérisé en ce que la fusion de la charge est effectuée en milieu réducteur pendant une durée suffisante pour obtenir la réduction de l'oxyde de fer contenu dans la charge, le dépôt du fer métallique obtenu, avec son évacuation éventuelle, et la formation d'un laitier artificiel blanc.

5. Procédé suivant la revendication 4, caractérisé en ce qu'un apport de carbone en poudre à la charge peut être prévu dans une mesure suffisante pour maintenir le milieu de réaction réducteur pour l'oxyde de fer.

6. Procédé suivant l'une quelconque des revendications 1 à 5, caractérisé en ce que la charge est alimentée en continu, de manière répartie, à la surface de la masse fondue contenue dans une cuve polygonale ou circulaire à chauffage par électrode immergée, en ce que la masse en fusion est amenée à circuler dans la cuve de manière à passer obligatoirement dans la zone de chauffage maximum des électrodes, avant d'atteindre la sortie de la cuve, et en ce que le laitier en fusion obtenu est évacué en continu par cette sortie.

7. Procédé suivant la revendication 6, caractérisé en ce qu'il comprend en outre l'introduction d'une fraction de la charge en dessous de la surface du bain.

8. Procédé suivant l'une quelconque des revendications 1 à 7, caractérisé en ce qu'il comprend en outre la vitrification du laitier artificiel par trempage, avec granulation de ce dernier, le séchage éventuel du laitier artificiel granulé et le broyage à sec du laitier artificiel granulé, de façon à obtenir un laitier artificiel broyé présentant une surface spécifique mesurée par la méthode de Blaine qui est comprise entre 5000 $cm^2/g$ et 10 000 $cm^2/g$.

9. Procédé suivant l'une quelconque des revendications 1 à 7, caractérisé en ce qu'il comprend en outre l'étirage du laitier en fusion obtenu en fibres de laitier.

10. Procédé suivant l'une quelconque des revendications 1 à 7, caractérisé en ce qu'il comprend en outre la division d'un filet de laitier en fusion en fibres de laitier vitrifiées, très fines, par tout moyen connu, ainsi qu'éventuellement le broyage de ces fibres.

11. Procédé suivant l'une ou l'autre des revendications 8 et 10, caractérisé en ce que le broyage à sec du laitier est effectué dans une enceinte sans communication avec le milieu extérieur.

12. Procédé suivant la revendication 11, caractérisé en ce que le broyage est effectué dans un broyeur vibrant avec recyclage.

13. Utilisation de laitier artificiel obtenu selon le procédé suivant l'une quelconque des revendications 8 et 10 à 12, pour la fabrication de liant hydraulique, caractérisé en ce qu'elle comprend l'addition au laitier broyé d'une charge inerte ou active, à grains de dimensions supérieure aux grains de laitier broyé, cette charge pouvant représenter jusqu'à 80% du produit fini.

14. Utilisation suivant la revendication 13, caractérisé en ce que, lorsque la fusion a été effectuée en milieu réducteur, on ajoute au laitier blanc broyé une charge de teinte blanche ou autre, selon la teinte souhaitée du liant hydraulique.

15. Utilisation suivant la revendication 14, caractérisé en ce qu'on ajoute de la craie blanche à titre de charge.

16. Utilisation suivant la revendication 14, caractérisé en ce qu'on ajoute de la pierre naturelle broyée à titre de charge.

17. Utilisation suivant l'une quelconque des revendications 13 à 16, caractérisé en ce que, dans le cas d'addition de charge inerte, on ajoute en supplément au liant hydraulique obtenu un déclencheur de réaction comprenant des ions au moins aussi électropositifs que $Ca^{++}$.

18. Utilisation de laitier artificiel obtenu selon le procédé suivant l'une quelconque des revendications 1 à 7, pour la fabrication de verre, en particulier de verre industriel ou décoratif.

19. Utilisation de laitier artificiel obtenu selon le procédé suivant l'une quelconque des revendications 1 à 7, pour la fabrication de laitier cellulaire et de verre cellulaire.

20. Utilisation du laitier artificiel obtenu selon le procédé suivant l'une quelconque des revendications 1 à 7, pour la fabrication de liant hydraulique, de verre, de laitier cellulaire, et/ou de fibres de laitier, caractérisée en ce que, à la sortie du four de fusion, le laitier en fusion est dirigé simultanément ou successivement dans au moins deux voies différentes correspondant aux fabrications souhaitées.

**Patentansprüche**

1. Verfahren zur Herstellung von künstlicher Schlacke, das umfasst die Herstellung einer Beschickung, die in freier oder gebundener Form mindestens Kalk, Kieselerde (Siliciumoxid) und Tonerde (Aluminiumoxid) enthält, und das vollständige Aufschmelzen dieser Beschickung bei einer Temperatur zwischen 1400 und 1550° C, wobei die chemische Zusammensetzung dieser Beschickung so ist, dass die geschmolzene künstliche Schlacke mindestens 45 bis 52% CaO, 15 bis 22% $Al_2O_3$ und 27 bis 34% $SiO_x$, bezogen auf das trockene Produkt, enthält und nach dem Schmelzen vitrifizieren kann, dadurch gekennzeichnet, dass die trockene Beschickung in einer einzigen Wanne in einem einzigen Erhitzungsarbeitsgang in Masse bei einer konstanten Temperatur, die auf elektrischem Wege erzielt wird, in eine vollständige Schmelze überführt wird, wobei die eingeführte Beschickung eine Korngrösse aufweist, die unterhalb einer Sieböffnung von 5 mm liegt.

2. Verfahren nach Anspruch 1, dadurch gekennzeichnet, dass die Schmelze der Beschickung erhalten wird durch Erwärmen der Beschickung auf die angegebene Temperatur allein auf elektrischem Wege.

3. Verfahren nach Anspruch 1, dadurch gekennzeichnet, dass die Schmelze der Beschickung erhalten wird durch Erwärmen der Beschickung auf die angegebene Temperatur auf elektrischem Wege unter gleichzeitiger Zufuhr von Wärme durch Verbrennen eines Brennstoffes, der in Gegenwart eines Sauerstoffträgers verbrennt.

4. Verfahren nach einem der Ansprüche 1 bis 3, dadurch gekennzeichnet, dass das Aufschmelzen der Beschickung in einem reduzierten Milieu während einer Zeitspanne durchgeführt wird, die ausreicht für die Reduktion des in der Beschickung enthaltenen Eisenoxids, unter Ablagerung des dabei erhaltenen metallischen Eisens, gegebenenfalls unter Abziehen desselben, und unter Bildung einer weissen Oberflächenschlacke.

5. Verfahren nach Anspruch 4, dadurch gekennzeichnet, dass pulverförmiger Kohlenstoff der Beschickung in einer Menge zugeführt werden kann, die ausreicht, um das Reaktionsmilieu für das Eisenoxid reduzierend zu halten.

6. Verfahren nach einem der Ansprüche 1 bis 5, dadurch gekennzeichnet, dass die Beschickung kontinuierlich und in einer solchen Verteilung der Oberfläche der in einer polygonalen oder kreisförmigen Wanne enthaltenen geschmolzenen Masse unter Erhitzung mit einer eingetauchten Elektrode zugeführt wird, dass die geschmolzene Masse in der Wanne so in Zirkulation versetzt wird, dass sie zwangsläufig in die Zone der maximalen Erwärmung der Elektroden gelangt, bevor sie den Ausgang der Wanne erreicht, und dass die erhaltene geschmolzene Schlacke durch diesen Ausgang kontinuierlich abgezogen wird.

7. Verfahren nach Anspruch 6, dadurch gekennzeichnet, dass es ausserdem die Einführung eines Teils der Beschickung unter die Oberfläche des Bades umfasst.

8. Verfahren nach einem der Ansprüche 1 bis 7, dadurch gekennzeichnet, dass es ausserdem die Vitrifikation der künstlichen Schlacke durch Abschrecken unter Granulation der letzteren, gegebenenfalls die Trocknung der granulierten künstlichen Schlacke und die trockene Zerkleinerung der granulierten künstlichen Schlacke in der Weise umfasst, dass man eine zerkleinerte künstliche Schlacke mit einer spezifischen Oberfläche, gemessen nach dem Verfahren von Blaine, erhält, die zwischen 5000 und 10 000 $cm^2/g$ liegt.

9. Verfahren nach einem der Ansprüche 1 bis 7, dadurch gekennzeichnet, dass es ausserdem das Ausziehen der erhaltenen geschmolzenen Schlacke zu Schlackefasern umfasst.

10. Verfahren nach einem der Ansprüche 1 bis 7, dadurch gekennzeichnet, dass es ausserdem die Aufteilung eines Fadens aus der geschmolzenen Schlacke in sehr feine vitrifizierte Schlakkenfasern auf irgendeine bekannte Weise sowie gegebenenfalls die Zerkleinerung dieser Fasern umfasst.

11. Verfahren nach dem einen oder anderen der Ansprüche 8 bis 10, dadurch gekennzeichnet, dass das trockene Zerkleinern der Schlacke in einem Behälter durchgeführt wird, der mit dem äusseren Milieu nicht in Verbindung steht.

12. Verfahren nach Anspruch 11, dadurch gekennzeichnet, dass das Zerkleinern in einer Vibrationsmühle unter Recyclisierung durchgeführt wird.

13. Verwendung der bei dem Verfahren nach einem der Ansprüche 8 und 10 bis 12 erhaltenen künstlichen Schlacke für die Herstellung eines hydraulischen Bindemittels, dadurch gekennzeichnet, dass sie umfasst die Zugabe einer inerten oder aktiven Beschickung zu der zerkleinerten Schlacke in Korndimensionen, die grösser sind als die Körner der zerkleinerten Schlacke, wobei diese Beschickung bis zu 80% des Endproduktes darstellen kann.

14. Verfahren nach Anspruch 13, dadurch gekennzeichnet, dass beim Aufschmelzen in einem reduzierenden Milieu der zerkleinerten weissen Schlacke eine Beschickung zugesetzt wird, die je nach der gewünschten Farbtönung des hydraulischen Bindemittels weiss oder anders gefärbt ist.

15. Verfahren nach Anspruch 14, dadurch gekennzeichnet, dass als Beschickung weisse Kreide zugesetzt wird.

16. Verwendung nach Anspruch 14, dadurch gekennzeichnet, dass als Beschickung zerkleinertes Naturgestein zugesetzt wird.

17. Verwendung nach einem der Ansprüche 13 bis 16, dadurch gekennzeichnet, dass im Falle der Zugabe einer inerten Beschickung dem erhaltenen hydraulischen Bindemittel zusätzlich ein Reaktionsinitiator zugesetzt wird, der Ionen enthält, die mindestens ebenso elektropositiv sind wie $Ca^{++}$.

18. Verwendung der nach dem Verfahren nach einem der Ansprüche 1 bis 7 erhaltenen künstlichen Schlacke zur Herstellung von Glas, insbesondere industriellem oder dekorativem Glas.

19. Verwendung der nach dem Verfahren nach einem der Ansprüche 1 bis 7 erhaltenen künstlichen Schlacke zur Herstellung von cellulärer Schlacke und cellulärem Glas.

20. Verwendung der nach dem Verfahren nach einem der Ansprüche 1 bis 7 hergestellten künstlichen Schlacke für die Herstellung von hydraulischem Bindemittel, von Glas, von cellulärer Schlacke und/oder von Schlackenfasern, dadurch gekennzeichnet, dass die geschmolzene Schlacke am Ausgang des Schmelzofens gleichzeitig oder nacheinander in mindestens zwei verschiedene Richtungen gelenkt wird, die den gewünschten Fabrikationen entsprechen.

**Claims**

1. Process for producing artificial slag, comprising the preparation of a charge containing at least, in a free or compounded state, lime, silica and alumina, and the complete melting of these charge at a temperature between 1400 and 1550° C, the chemical composition of said charge being such that the molten artificiel slag contains at least 45 to 52% CaO, 15 to 22% $Al_2O_3$ and 27 to 34% $SiO_2$ with respect to the dry material and is able to vitrify after the melting, characterized in that the dry charge is brought to complete melting in a single vessel by a single heating step, within the mass, at a constant temperature, obtained by electrical way, the introduced charge having a granulometry lower than screen apertures of 5mm.

2. Process according to claim 1, characterized in that, in order to carry out the charge melting, said charge is heated to said temperature only by electrical way.

3. Process according to claim 1, characterized in that, in order to carry out the charge melting, said charge is heated to said temperature by electrical way, with simultaneous heat supply by combustion of a combustible burning in presence of a combustive.

4. Process according to anyone of claims 1 to 3, characterized in that the charge melting is carried out in a reducing medium during such a period that the reduction of iron oxide contained in the charge is reached, the obtained metal iron being settled and optionally removed, and a white artificiel slag being produced.

5. Process according to claim 4, characterized in that a powdered carbon supply to the charge can be provided in an amount sufficient to maintain the reaction medium reductant with respect to iron oxide.

6. Process according to anyone of claims 1 to 5, characterized in that the charge is continuously supplied, in a distributed manner, at the molten mass surface contained in a polygonal or circular vessel with heating by means of immersed electrodes, in that the molten mass is brought to circulate in the vessel in such a way that said mass streams inevitably in the highest heating zone of the electrodes, before to reach the vessel outlet, and in that the obtained molten slag is continuously discharged through this outlet.

7. Process according to claim 6, further characterized by the introduction of a charge portion below the bath surface.

8. Process according to anyone of claims 1 to 7, further characterized by the steps of vitrifying the artificial slag by hardening, the slag being granulated, optionally drying the granulated artificial slag and dry grinding the granulated artificial slag, so as to obtain a ground artificial slag having a specifice surface between $5000 cm^2/g$ and $10\,000 cm^2/g$, as measured with the Blaine method.

9. Process according to anyone of claims 1 to 7, further characterized by the step of drawing the obtained molten slag in slag fibers.

10. Process according to anyone of claims 1 to 7, further characterized by the step of dividing a jet of molten slag in very fine vitrified slag fibers by

anyone known means, said fibers being optionally ground.

11. Process according to either one of claims 8 and 10, characterized in that the step of dry grinding the slag is carried out within an enclosure without connecting with the external medium.

12. Process according to claim 11, characterized in that the step of grinding is carried out within a vibrating grinder with recycling.

13. Use of artificial slag obtained by means of the process according to anyone of claims 8 and 10 to 12, for manufacturing hydraulic binder, characterized by the step of adding to the grinded slag an inert or activated filler which has a granule size higher than the grinded slag, and which may be supplied up to 80% of the finished product.

14. Use according to claim 13, characterized in that, after the melting in reducing medium, the grinded white slag is supplied with a filler of white colour or of another colour, according to the sought colour of the hydraulic binder.

15. Use according to claim 14, characterized in that withe chalk is added as filler.

16. Use according to claim 14, characterized in that natural stone is added as filler.

17. Use according to anyone of claims 13 to 16, characterized in that, in case of inert filler addition, a reaction activator comprising ions at least as electropositive as $Ca^{++}$ is supplementarily added to the hydraulic binder.

18. Use of artificial slag obtained by means of the process according to anyone of claims 1 to 7, for manufacturing glass, particularily industrial or decorative glass.

19. Use of artificial slag obtained by means of the process according to anyone of claims 1 to 7, for manufacturing cellular slag or cellular glass.

20. Use of artificial slag obtained by means of the process according to anyone of claims 1 to 7, for manufacturing hydraulic binder, glass, cellular slag and/or slag fibers, characterized in that, at the outlet of the melting furnace, the molten slag is led simultaneously or successively into at least two different ways corresponding to the sought fabrications.

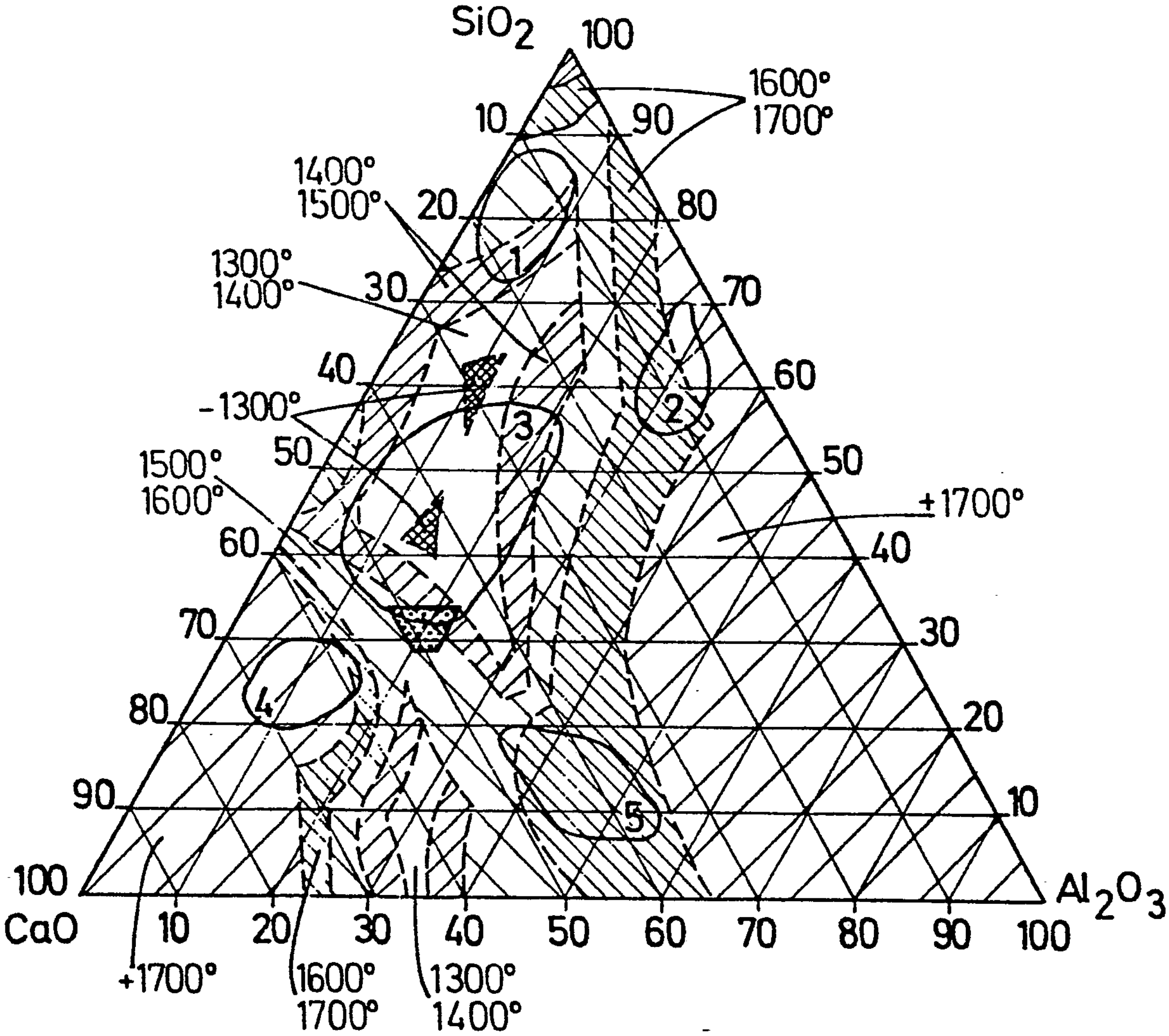
SiO2
100
1600°
1700°
10
90
1400°
1500°
20
80
1300°
1400°
30
70
40
60
-1300°
50
50
1500°
1600°
±1700°
60
40
70
30
80
20
90
10
100
CaO
Al2O3
10
20
30
40
50
60
70
80
90
100
1
2
3
4
5
+1700°
1600°
1700°
1300°
1400°